# EUROPÄISCHE PATENTANMELDUNG

(11) **EP 2 581 158 A1**
(43) Veröffentlichungstag der Anmeldung: **17.04.2013**
(21) Anmeldenummer: 13150922.6
(22) Anmeldetag: 03.12.2007
(51) Int. Cl.: B23B 31/00, G01M 1/32, G01M 1/34

(54) **Werkzeugkupplung und Verfahren zum Auswuchten einer Werkzeugkupplung**

(30) Priorität: 06.12.2006 CH 19792006
(62) Teilanmeldung aus: 07816291.4
(71) Anmelder: Rego-Fix AG, 4456 Tenniken (CH)
(72) Erfinder: Gerber, Ernst, 4418 Reigoldswil (CH)
(74) Vertreter: Braun, André jr.

(57) **Zusammenfassung**

Zum Auswuchten einer Werkzeugkupplung werden die Kompensationsmassnahmen (Materialabtrag, Einsetzen von anderem Material) in zwei axial voneinander beabstandeten Ebenen vorgenommen. Werkzeugkupplungen sind mit Ausnehmungen (8,11) zur Unwuchtkompensation in zwei axial voneinander beabstandeten Ebenen versehen.

## Beschreibung

Die Erfindung betrifft ein Verfahren zum Auswuchten einer Werkzeugkupplung und mittels dieses Verfahrens ausgewuchtete Werkzeugkupplungen.

Durch den Einsatz von zunehmend leistungsfähigeren Schneidstoffen werden bei Werkzeugmaschinen immer höhere Drehzahlen, derzeit schon 50 000 U/min und mehr, möglich. Mit höheren Drehzahlen nehmen die negativen Auswirkungen von Unwucht zu. Solche Auswirkungen sind Verkürzung der Lebensdauer der Lager der Maschinenspindeln durch ungleichmässige Belastung, verminderte Oberflächengüte des bearbeiteten Werkstückes und verkürzte Standzeit der Schneidwerkzeuge.

Dieses Problem und Massnahmen zu seiner Behebung sind seit langem bekannt. So ist beispielsweise üblich, zum Kompensieren der Unwucht Bohrungen an der Aussenseite der Werkzeugkupplung anzubringen. In EP 1 007 256 ist ein Werkzeugträger beschrieben, bei dem Ausgleichsbohrungen in einer im Inneren der Kupplung angeordneten radialen Fläche angebracht sind.

Eine andere Lösung besteht in der Verwendung von Exzenterscheiben oder Ausgleichsringen, wie z.B. in DE 298 09 653 U1 oder WO 90/11862 gezeigt.

Wenn eine Massnahme zum Unwuchtausgleich (Materialabtrag, Einsetzen von anderen Materialien) in einer axialen Distanz von der Stelle getroffen wird, welche die Unwucht verursacht, so ist die Unwucht zwar statisch ausgeglichen, aber die von der Drehzahl abhängige dynamische Unwucht nimmt bei steigenden Drehzahlen zu. Neuere bekannte Massnahmen zum Unwuchtausgleich sehen deshalb einen Materialabtrag in oder nahe der Ebene vor, in welcher die Unwucht auftritt, um auch die dynamische Unwucht auszugleichen.

Es hat sich aber nun herausgestellt, dass auch diese Massnahme nicht genügt, um die dynamische Unwucht bei sehr hohen Drehzahlen wirksam auszuschalten. Der Erfindung liegt deshalb die Aufgabe zugrunde, die Unwuchtkompensation bei Werkzeugkupplungen weiter zu verbessern.

Erfindungsgemäss wird dies dadurch erreicht, dass Massnahmen zum Unwuchtausgleich in zwei axial voneinander beabstandeten Ebenen vorgenommen werden.

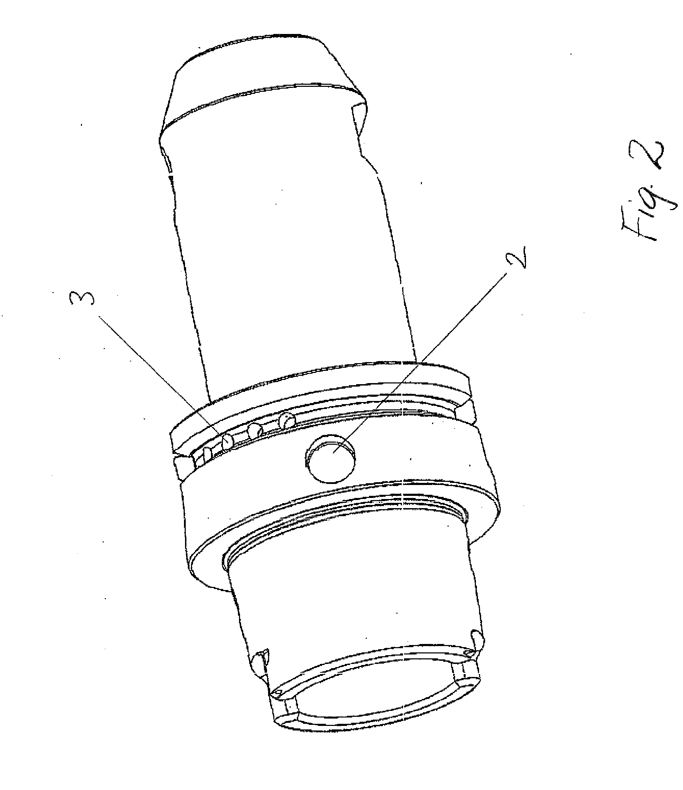

Im Folgenden werden anhand der beiliegenden Zeichnungen bevorzugte Ausführungsbeispiele der Erfindung beschrieben. Es zeigen
- Fig. 1 und 2: perspektivische Darstellungen von Hohlschaftkegel(HSK)-Werkzeugkupplungen gemäss dem Stand der Technik
- Fig. 3 - 8: verschiedene Ausführungsformen von Hohlschaftkegeln von Werkzeugkupplungen nach der Erfindung

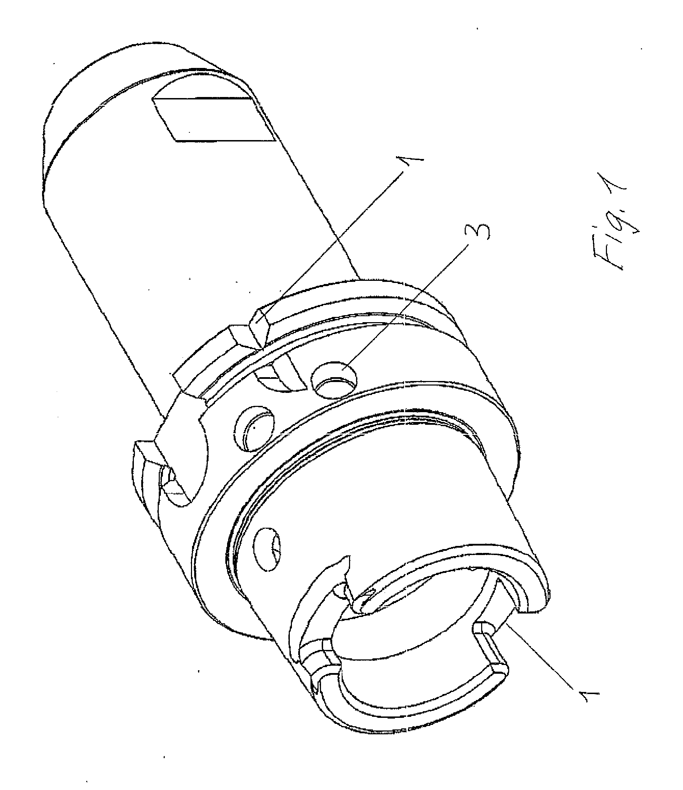

Die in Fig. 1 gezeigte Hohlschaftkegel(HSK)-Werkzeugkupplung weist die bekannten Ausnehmungen, d.h. Ausfräsungen 1, Bohrungen 2 etc. auf, die beispielsweise beim automatischen Werkzeugwechsel für das Greifen, die Positionierung etc. erforderlich sind. Diese Ausnehmungen sind in der Regel auf gegenüberliegenden Seiten unterschiedlich dimensioniert und erzeugen daher Unwucht. Zur Kompensation dieser Unwucht ist es üblich, möglichst in der Nähe des Unwuchterzeugers einen Materialabtrag, meistens in Form von Bohrungen 3, vorzunehmen.

Durch diese Art der Unwuchtkompensation wird zwar die statische Unwucht kompensiert, nicht aber die dynamische Unwucht, die bei höheren Drehzahlen zu einer Taumelbewegung der Werkzeugkupplung führt.

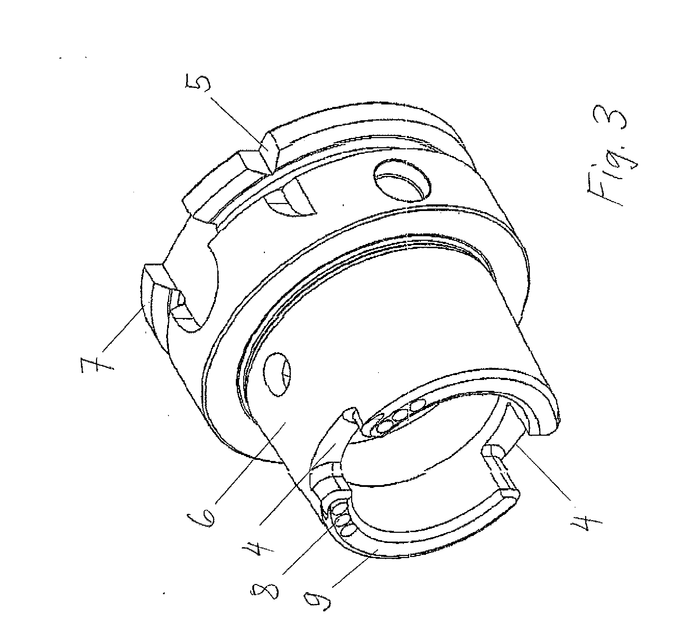

Bei den in den Fig. 3-8 dargestellten Hohlschaftkegeln sind die häufigsten Verursacher der Unwucht gezeigt, nämlich die beiden einander gegenüberliegenden Ausnehmungen 4 in der Stirnseite 9 der Werkzeugkupplung für die Verbindung mit der Maschinenspindel und die Übertragung des Antriebsdrehmoments, sowie Positionierungsnuten 5 und eine an der gegenüberliegenden Seite angebrachte, d.h. in der Figur nicht sichtbare Bohrung für einen Chip (elektronische Datenerfassung) in dem an die Kegelfläche 6 anschliessenden Flansch 7.

Bei der in Fig. 3 gezeigten Version ist die stirnseitige Unwucht infolge der Ausnehmungen 4 durch Bohrungen 8 in der Stirnfläche 9 der Werkzeugkupplung, d.h. also in der axialen Ebene der Unwuchterzeugung kompensiert. Die beim Flansch 7 befindlichen Ausnehmungen werden ebenfalls in derselben axialen Ebene der Unwuchterzeugung, d.h. durch Bohrungen 14 kompensiert.

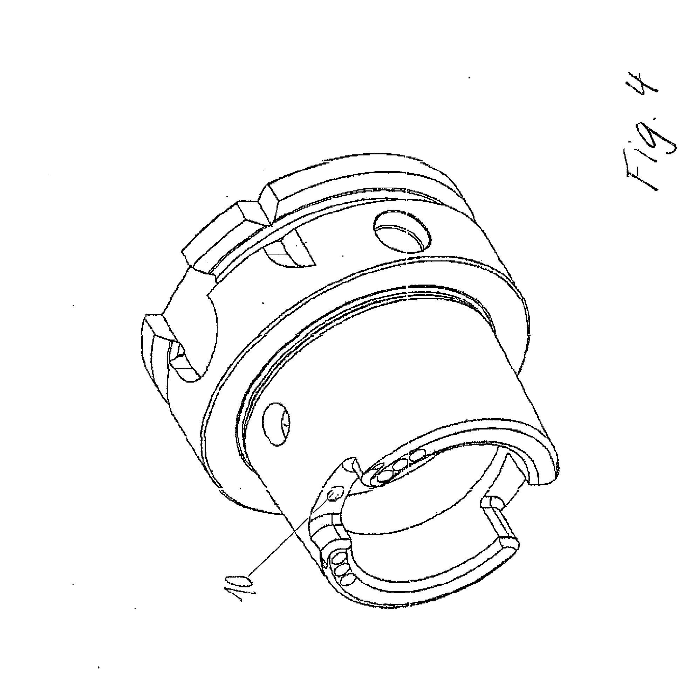

Bei der in Fig. 4 gezeigten Version sind zusätzliche Kompensationsbohrungen 10 in den Ausnehmungen 4 selbst angeordnet.

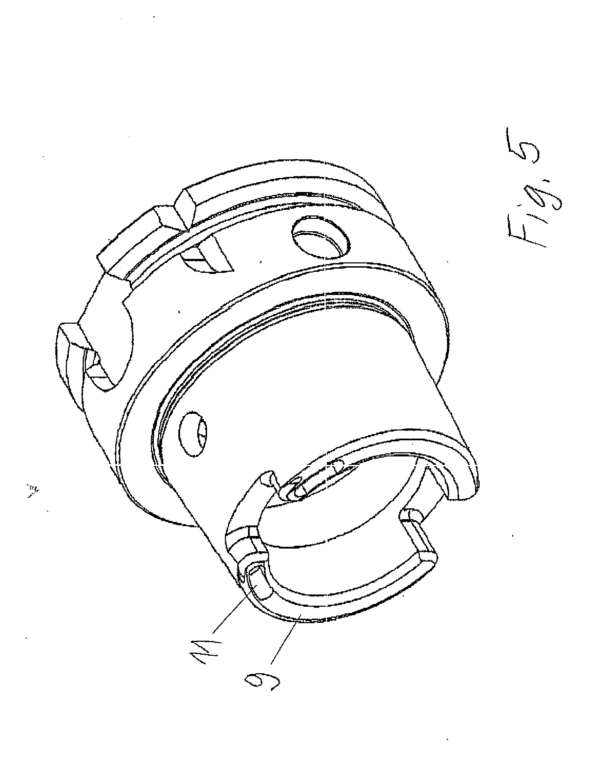

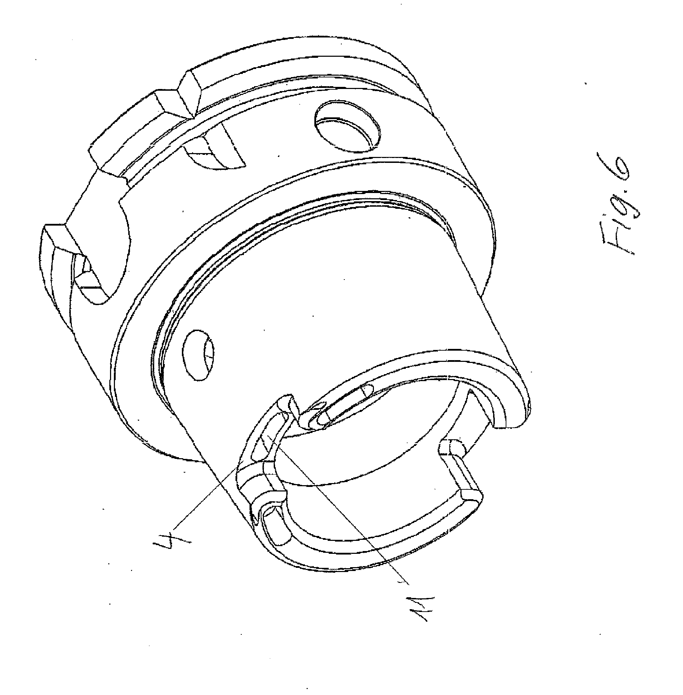

Bei der in Fig. 5 gezeigten Ausführungsform sind anstelle von Bohrungen Langlöcher 11 in der Stirnfläche 9 angeordnet. Fig. 6 zeigt die Anordnung von zusätzlichen Langlöchern in den Ausnehmungen 4 selbst.

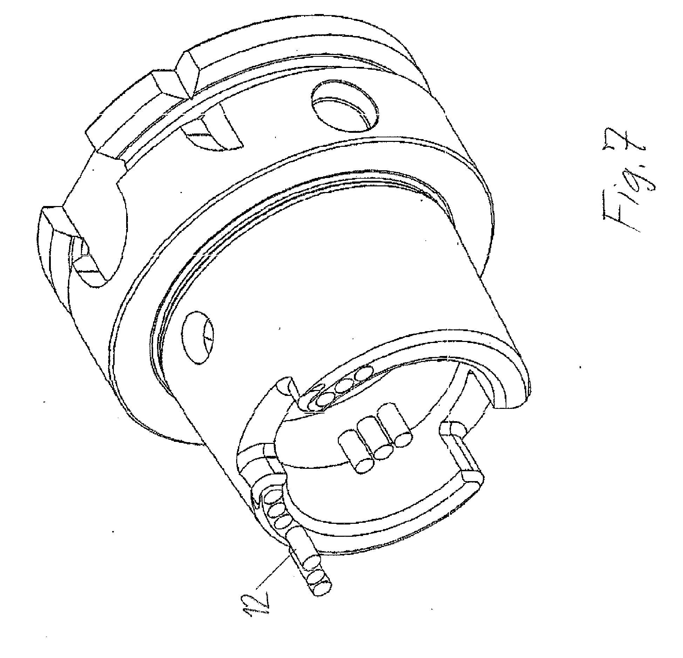

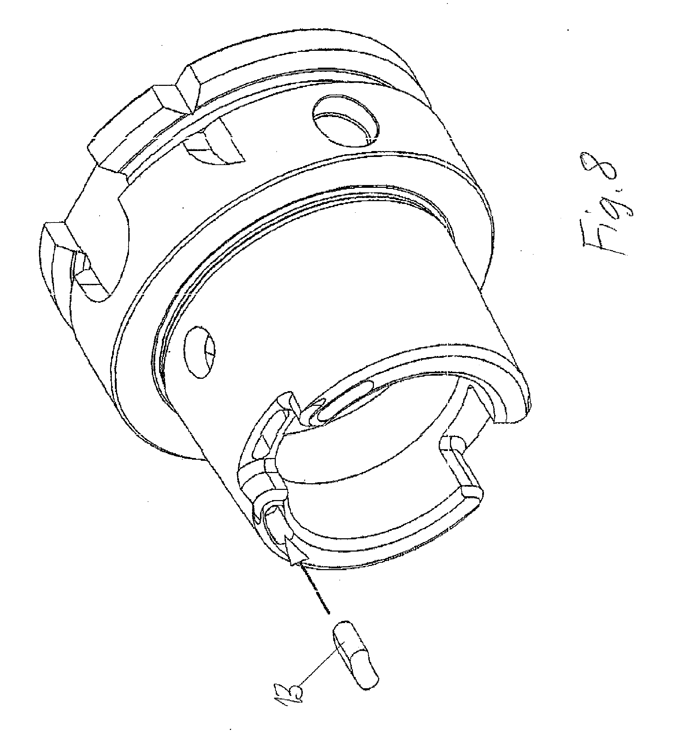

Wie in Fig. 7 dargestellt, können die Bohrungen 8 mit zylindrischen Einsätzen 12 verschlossen werden. Dies verhindert das Eindringen von Schmutz und ermöglicht ein Abtasten der mit Kompensationsbohrungen versehenen Flächen für Messzwecke. Um den Kompensationseffekt zu erzielen, bestehen die Einsätze 12 aus einem leichteren Material, beispielsweise aus Kunststoffen, Leichtmetallen oder Hohlkörpern. Fig. 8 zeigt, wie zur Kompensation eingebrachte Langlöcher 11 mit entsprechend geformten Einsätzen 13 verschlossen werden.

Die erfindungsgemässe Unwuchtkompensation wurde anhand einer HSK-Werkzeugkupplung dargestellt, aber ihr Prinzip ist selbstverständlich ohne weiteres auch bei anderen Arten von Werkzeugkupplungen einsetzbar.

## Patentansprüche

1. Verfahren zum Auswuchten einer Werkzeugkupplung mit einer Achse, einer zur Achse senkrechten maschinenseitigen Endfläche (9), sowie in der Endfläche angeordneten, einander gegenüberliegenden Antriebsausnehmungen (4) für die Verbindung mit einer Antriebsspindel, bei der in zwei axial voneinander beabstandeten Ebenen Massnahmen zum Ausgleich einer Unwucht vorgenommen werden, **dadurch gekennzeichnet, dass** eine der beiden getroffenen Massnahmen darin besteht, dass in der maschinenseitigen Endfläche (9) der Werkzeugkupplung zusätzlich zu den Antriebsausnehmungen (4) ein Materialabtrag (8, 11) erfolgt.

2. Werkzeugkupplung mit einer Achse, einer zur Achse senkrechten maschinenseitigen Endfläche (9), in der Endfläche angeordneten, einander gegenüberliegenden Antriebsausnehmungen (4) für die Verbindung mit einer Antriebsspindel, sowie in zwei voneinander beabstandeten Ebenen vorgenommene Massnahmen zur Kompensation von Unwucht, **dadurch gekennzeichnet, dass** eine der beiden Massnahmen darin besteht, dass zusätzlich zu den Antriebsausnehmungen (4) in der maschinenseitigen Endfläche (9) Ausnehmungen (8, 11) angeordnet sind.
